(19) Europäisches Patentamt
European Patent Office
Office européen des brevets

(11) Veröffentlichungsnummer: **0 035 671**
**B1**

(12) # EUROPÄISCHE PATENTSCHRIFT

(45) Veröffentlichungstag der Patentschrift: **11.07.84**

(51) Int. Cl.³: **C 09 B 29/08,** C 09 B 31/04, C 09 B 43/40 // D06P1/18

(21) Anmeldenummer: **81101140.2**

(22) Anmeldetag: **18.02.81**

(54) **Wasserunlösliche Azofarbstoffe, Verfahren zu ihrer Herstellung und Verwendung zum Färben und Bedrucken von synthetischem, hydrophobem Fasermaterial.**

(30) Priorität: **28.02.80 DE 3007518**

(43) Veröffentlichungstag der Anmeldung: **16.09.81 Patentblatt 81/37**

(45) Bekanntmachung des Hinweises auf die Patenterteilung: **11.07.84 Patentblatt 84/28**

(84) Benannte Vertragsstaaten: **BE CH DE FR GB IT LI**

(56) Entgegenhaltungen:
**CH - A - 367 254**
**CH - A - 488 783**
**FR - A - 1 530 734**
**FR - A - 2 033 350**
**FR - E - 93 514**
**US - A - 2 108 824**
**US - A - 2 200 543**
**US - A - 2 245 259**
**US - A - 2 311 033**
**US - A - 2 386 599**
**US - A - 3 169 954**
**US - A - 3 329 669**
**JP-A-46/5549**
**Die Akte enthält technische Angaben, die nach dem Eingang der Anmeldung eingereicht wurden und die nicht in dieser Patentschrift enthalten sind.**

(73) Patentinhaber: **CASSELLA Aktiengesellschaft, Hanauer Landstrasse 526, D-6000 Frankfurt am Main 61 (DE)**

(72) Erfinder: **Tappe, Horst, Dr., Ringstrasse 9, D-6057 Dietzenbach (DE)**
Erfinder: **Bühler, Ulrich, Dr., Nidderauer Strasse 13, D-6369 Schöneck I (DE)**
Erfinder: **Roth, Kurt, Breckenheimer Strasse 35, D-6238 Hofheim/Taunus (DE)**
Erfinder: **Weyer, Hans J., Stettiner Strasse 10, D-6000 Frankfurt/Main-60 (DE)**
Erfinder: **Kosubek, Uwe, Am Vogelanger 28, D-6087 Büttelborn (DE)**

(74) Vertreter: **Urbach, Hans-Georg, Dr. et al, Hanauer Landstrasse 526, D-6000 Frankfurt am Main 61 (DE)**

EP 0 035 671 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue, wasserunlösliche Azofarbstoffe der allgemeinen Formel I

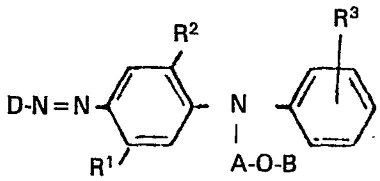

(I)

in der

D Nitrothiazolyl, das gegebenenfalls noch durch Methyl substituiert ist oder Nitrothienyl, das gegebenenfalls noch durch eine weitere Nitrogruppe oder durch Cyan substituiert ist,

A eine Alkylenkette mit 1 bis 6 C-Atomen, die durch eine OH-Gruppe substituiert sein kann,

B Wasserstoff, eine Alkylgruppe mit 1 bis 4 C-Atomen, Hydroxyalkyl mit 2 bis 4 C-Atomen, $C_1$ bis $C_4$ Alkoxy- oder $C_1$ bis $C_4$ Alkanoyloxyalkyl mit 3 bis 8 C-Atomen, Hydroxypolyoxyalkylen 4 bis 12 C-Atomen, $C_1$ bis $C_4$ Alkoxy- oder $C_1$ bis $C_4$ Alkanoyloxypolyoxyalkylen mit 5 bis 16 C-Atomen, eine Alkanoylgruppe mit 2 bis 6 C-Atomen, Benzoyl,

$R^1$ Wasserstoff, Methyl und Chlor,

$R^2$ Wasserstoff, Halogen, Alkyl mit 1 bis 4 C-Atomen oder Alkoxy mit 1 bis 4 C-Atomen,

$R^3$ Wasserstoff und Alkoxy mit 1 bis 8, vorzugsweise 1 bis 4, C-Atomen

bedeuten.

Die kohlenstoffhaltigen für A, B, $R^2$ oder $R^3$ stehenden Reste können geradkettig oder verzweigt sein.

Alkylenketten mit 1 bis 6 C-Atomen, die für A stehen können sind Methylen, Ethylen und Trimethylen- bis Hexamethylen. Sofern die für A stehende Alkylenketten mehr als 2 Kohlenstoffatome aufweisen, können sie auch verzweigt sein. Solche verzweigten Alkylenketten sind beispielsweise 1- oder 2-Methyl-, Ethyl-, Propyl- oder Butylethylen, 1-, 2- oder 3-Methyl-, Ethyl- oder Propyltrimethylen, 1-, 2-, 3- oder 4-Methyl- oder Ethyltetramethylen oder 1-, 2-, 3-, 4- oder 5-Methylpentamethylen, 1,2-Dimethyl- oder Diethylethylen, 1-Methyl-2-ethyl- oder 2-Methyl-1-ethyl-ethylen, 1,2- oder 2,3-Dimethyltrimethylen, Methyl- ethyltrimethylen-Gruppen und 1,2-, 1,3-, 1,4- oder 2,3-Dimethyl-tetramethylen.

Für B stehende geradkettige oder verzweigte Alkylgruppen mit 1 bis 4 Kohlenstoffatomen sind Methyl, Ethyl, Propyl-1, Propyl-2, Butyl-1 oder -2, 2-Methyl-propyl-1 oder -2, Hydroxyalkylgruppen mit 2 bis 4 Kohlenstoffatomen, für die B stehen kann, sind beispielsweise 2-Hydroxyethyl, 2-Hydroxypropyl-1, 1--Hydroxypropyl-2, 2-Hydroxypropyl-1, 1- oder 3--Hydroxybutyl-2. Für B stehende Hydroxypolyoxyalkylengruppen mit 4 bis 12 Kohlenstoffatomen entsprechen der allgemeinen Formel IVa

$$-(\underset{R^4}{\underset{|}{CH}}-\underset{R^5}{\underset{|}{CH}}-O)_p-H \qquad (IVa)$$

worin $R^4$ und $R^5$ Wasserstoff, Methyl oder Äthyl bedeuten mit der Voraussetzung, dass $R^4$ und $R^5$ gemeinsam nicht mehr als 2 C-Atome haben, und p eine Zahl von 2 bis $\frac{12}{S+2}$ bedeutet.

S ist dabei die Summe der in $R^4$ und $R^5$ vorhandenen C-Atome.

Bevorzugte Hydroxypolyoxyalkylengruppen sind solche, in denen mindestens eines von $R^4$ oder $R^5$ Wasserstoff, das andere Methyl bedeutet und insbesondere solche, in denen beide Symbole $R^4$ und $R^5$ für Wasserstoff stehen.

Für B stehende $C_1$ bis $C_4$ Alkoxy- oder $C_1$ bis $C_4$ Alkanoyloxypolyoxyalkylenreste leiten sich von den Hydroxypolyoxyalkylenresten der Formel IVa ab durch Verätherung bzw. Acylierung der endständigen OH-Gruppe. Diese Reste entsprechen somit den Formeln IVb und IVc

$$-(\underset{R^4}{\underset{|}{CH}}-\underset{R^5}{\underset{|}{CH}}-O)_p-C_nH_{2n+1} \qquad (IVb)$$

$$-(\underset{R^4}{\underset{|}{CH}}-\underset{R^5}{\underset{|}{CH}}-O)_p-COC_mH_{2m+1} \qquad (IVc)$$

worin $R^4$, $R^5$ und p dieselben Bedeutungen haben wie in Formel IV und n eine Zahl von 1 bis 4 und m eine Zahl von 0 bis 3 ist.

Die in den Resten der Formel IVb enthaltenen Alkylgruppen-$C_nH_{2n+1}$ können sein Methyl, Ethyl, Propyl-1 oder -2, Butyl-1 oder -2 und Methylpropyl-1 oder -2. Acylreste der Formel $COC_mH_{2m+1}$, die in den Resten der Formel IVc enthalten sind, sind beispielsweise Formyl, Acetyl, Propionyl und Butyryl.

Die Verätherung bzw. Acylierung der endständigen OH-Gruppen bewirkt eine Verminderung der Hydrophylie der erfindungsgemässen Farbstoffe und kann sich somit günstig auf damit zusammenhängende anwendungstechnische Eigenschaften, wie beispielsweise das Ziehvermögen auf hydrophobe Fasern, oder die Beständigkeit gegenüber Hydrolyseeinflüssen auswirken.

Alkanoylgruppen mit 2 bis 6 C-Atomen, die für B stehen können, sind Acetyl, Propionyl, Butyryl, Valeryl und Capronyl, wobei Acetyl und Propionyl bevorzugt sind.

Besonders bevorzugt sind erfindungsgemässe Farbstoffe der Formel I, in denen -AOB die $\beta$-Hydroxyäthylgruppe ist.

Für $R^2$ stehendes Alkyl mit 1 bis 4 C-Atomen ist Methyl, Ethyl, Propyl-1 oder -2, Butyl-1 oder -2 und Methylpropyl-1 oder -2.

Für $R^2$ stehendes Alkoxy mit 1 bis 4 C-Atomen ist Methoxy, Ethoxy, Prop-1 oder 2-oxy, But-1 oder 2-oxy, Methyl-prop-1 oder 2-oxy.

Für $R^3$ stehende Alkoxygruppen mit 1 bis 8 C-Atomen können linear oder, sofern sie mehr als 3 C-Atome haben, auch verzweigt sein.

Beispiele für solche Alkoxygruppen sind Methoxy, Ethoxy, Prop-1-oxy, Prop-2-oxy, n-But-1-oxy, n--But-2-oxy, 2-Methyl-prop-2-oxy, tert.-Butoxy, Pent-1-oxy, Pent-3-oxy, n- oder Isohexoxy, n-Octyl--1-oxy, 2-Ethylhex-1-oxy.

Bevorzugt ist für $R^1$ Wasserstoff und Methyl, für $R^2$ Wasserstoff, Methyl und Methoxy.

Vorzugsweise steht $R^3$ für Wasserstoff, Alkoxy mit 1 bis 4 C-Atomen.

Besonders bevorzugt sind solche erfindungsgemässe Farbstoffe, die mehrere bevorzugte Merkmale aufweisen, wie z.B. solche, bei denen $R^1$, $R^2$ und $R^3$ Wasserstoff sind.

Die erfindungsgemässen Farbstoffe werden erhalten, indem man ein von ionogenen Gruppen freies aromatisches Amin der allgemeinen Formel VII

$$D\text{-}NH_2 \qquad (VII)$$

diazotiert und mit einem Diphenylaminderivat der allgemeinen Formel VIII

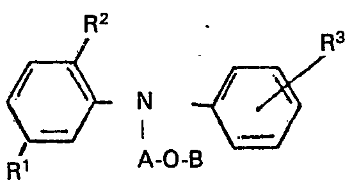

(VIII)

kuppelt, wobei A, B, $R^1$, $R^2$ und $R^3$ die oben angegebenen Bedeutungen haben.

Die Diazotierung des Amins der Formel VII geschieht in an sich bekannter Weise durch Einwirkung von salpetriger Säure oder salpetrige Säure abspaltenden Verbindungen. Beispielsweise können die Aminoazobenzole in Schwefelsäure, Salzsäure oder in niederen aliphatischen Carbonsäuren, wie z.B. Essigsäure oder Propionsäure, gelöst werden und bei 0 bis 60°C durch Zusatz von Nitrosylschwefelsäure bzw. Natriumnitrit diazotiert werden. Die Kupplung wird im sauren wässrigen Medium bzw. in einer Mischung aus Wasser und einem in Wasser wenig löslichen Alkohol, wie n- oder i-Butanol, bei Temperaturen von 0 bis 30°C ausgeführt. Bevorzugt wird hierbei der Temperaturbereich von 0 bis 5°C. Zur Vervollständigung der Kupplungsreaktion kann es zweckmässig sein, den pH-Wert des Kupplungssatzes gegen Ende der Reaktion durch Zusatz von Alkalien, wie z.B. von Natriumacetat auf einen Wert von 3 bis 6 zu puffern. Es kann im Hinblick auf die Formierung der Dispersionsfarbstoffe oder hinsichtlich ihrer Farbausbeute von Vorteil sein, ein Gemisch von diazotierten Aminen der Formel VII mit einer Kupplungskomponente der Formel VIII oder ein diazotiertes Amin der Formel VII mit einem Gemisch von Kupplungskomponenten der allgemeinen Formel VIII zu kuppeln oder zwei oder mehrere auf getrenntem Wege dargestellte Einzelfarbstoffe zu mischen.

Als Amine der Formel VII kommen beispielsweise in Betracht:

2-Amino-5-nitro-thiazol, 2-Amino-4-methyl-5-nitro-thiazol, 2-Amino-5-nitro-4-methyl-thiazol, 3-Nitro-2-amino-thiophen, 3,5-Dinitro-2-aminothiophen, 3-Cyan-5-nitro-2-aminothiophen.

Beispiele für Kupplungskomponenten der allgemeinen Formel VIII, die für die Herstellung erfindungsgemässer Farbstoffe gut geeignet sind, sind der folgenden Tabelle 1 zu entnehmen.

Tabelle 1

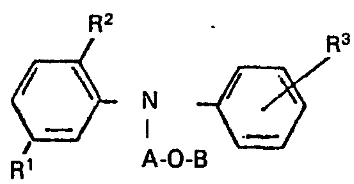

(VIII)

| $R^1$ | $R^2$ | $R^3$ | A | B |
|---|---|---|---|---|
| $CH_3$ | H | $OCH_3$ | $-CH_2-CH_2$ | $-CH_2-CH_2-OH$ |
| $CH_3$ | $CH_3$ | H | $-CH_2-CH_2$ | $-CH_2-CH_2-O-C_4H_9(n)$ |
| Cl | H | H | $-(CH_2)_3-$ | H |
| H | $CH_3$ | $OCH_3$ | $-(CH_2)_3-$ | $-(CH_2-CH_2-O-)_2C_2H_5$ |
| H | H | H | $-CH_2-CH_2-$ | $-(CH_2-CH_2-O)_2-OCO-C_4H_9$ |
| H | $CH_3$ | H | $-(CH_2)_6-$ | $-CH_2-CH_2-O-CO-CH_3$ |
| H | Cl | H | $-(CH_2)_4-$ | $-(CH_2-CH_2-O-)_3-CH_3$ |
| $CH_3$ | H | H | $-CH_2-CH_2-$ | $-(CH_2-CH_2O)_6-COC_2H_5$ |
| H | H | $OC_4H_9$ | $-CH_2-$ | $-CH_2-CH_2-CH_2-O-H$ |
| H | H | H | $-CH_2-CH-$<br>\|<br>$CH_3$ | $-CH_2-CH_2-OC_4H_9(iso)$ |
| $CH_3$ | H | H | $-CH - CH-$<br>\| \|<br>$C_2H_5$ $C_2H_5$ | $-CH-CH_2OH$<br>\|<br>$CH_3$ |
| H | $CH_3$ | H | $-(CH_2)_3-CH-$<br>\|<br>$C_2H_5$ | $-CH_2-CH_2OH$ |

Tabelle 1 (Fortsetzung)

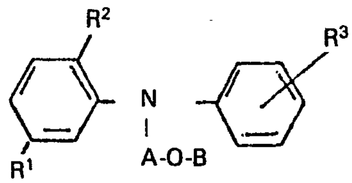

(VIII)

| $R^1$ | $R^2$ | $R^3$ | A | B |
|---|---|---|---|---|
| $CH_3$ | $CH_3$ | H | $-CH(CH_2)_2-CH-$<br>I I<br>$CH_3$ $CH_3$ | $-(CH_2-CH_2O)_2H$ |
| H | H | $OCH_3$ | $-CH_2-CH-$<br>I<br>$C_4H_9$ | $-(CH_2-CH_2O)_2COCH_3$ |
| $CH_3$ | H | $OCH_3$ | $-(CH_2)_2-CH-(CH_2)_2-$<br>I<br>$CH_3$ | $-CH_3$ |
| H | $CH_3$ | $OCH_3$ | $-(CH_2)_2-CH-$<br>I<br>$C_2H_5$ | $-CH_2-CH_2OH$ |

Die zur Herstellung der erfindungsgemässen Farbstoffe erforderlichen Diazokomponenten der Formel VII sind gängige Handelsprodukte, die Kupplungskomponenten der Formel VIII können nach verschiedenen, an sich bekannten Verfahren hergestellt werden.

Beispielsweise können gemäss den Angaben in der Deutschen Offenlegungsschrift 2 228 350 Diphenylaminderivate der Formel

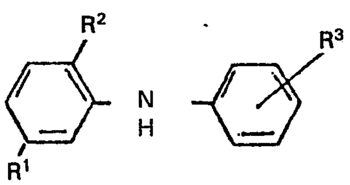

worin $R^1$, $R^2$ und $R^3$ die oben angegebenen Bedeutungen haben, mit Verbindungen der Formel Hal-A-O-B, worin Hal Chlor oder Brom ist und A und B ebenfalls die oben angegebenen Bedeutungen haben, zu Kupplungskomponenten der Formel VIII umgesetzt werden.

Eine andere an sich bekannte Möglichkeit zur Herstellung der erforderlichen Kupplungskomponenten besteht in der Umsetzung von Anilinderivaten mit Phenol- oder Halogenbenzol-Derivaten nach dem Reaktionsschema

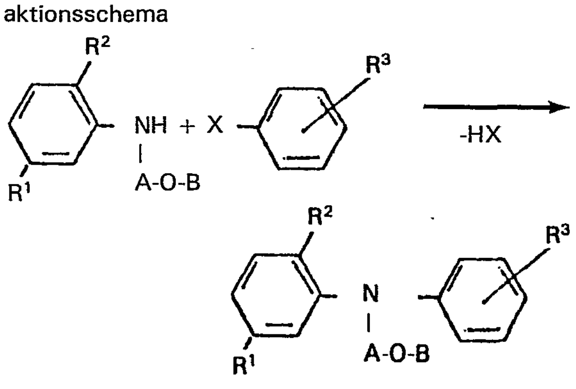


wobei $R^1$, $R^2$, $R^3$, A und B die vorstehend genannten Bedeutungen haben und X Chlor oder Brom oder OH ist.

Die Reaktion erfolgt nach den Angaben der Literatur in der Regel in Gegenwart organischer, inerter Lösungsmittel wie z.B. Halogenbenzolen, höheren Alkanolen oder Polyglykol-Derivaten, Dimethylformamid und dergleichen, kann aber auch in der Schmelze erfolgen. Die Abspaltung von HX begünstigende Zusätze wie Säurefänger, Kupfer und Kupfersalze oder wasserabspaltende Mittel können dabei die Reaktion erleichtern.

Die erfindungsgemässen Farbstoffe eignen sich insbesondere zum Färben und Bedrucken von hydrophoben Fasermaterialien, wie beispielsweise Polyolefinen, Polyvinylverbindungen, Polyamid, Polyacrylnitril, Cellulose-2½-acetat, Cellulosetriacetat und insbesondere Polyestermaterialien, z.B. Polyäthylenglykolterephthalat. Sie liefern hierauf nach üblichen Färbe- und Druckverfahren farbstarke, brillante orange bis marineblaue Färbungen und Drucke mit sehr guten Echtheitseigenschaften, insbesondere sehr guter Licht-, Trockenhitzeplissier-, Trockenhitzefixier- und Korathronechtheit bei sehr gutem Thermomigrationsverhalten.

Das Färben der genannten Fasern die einzeln, oder im Gemisch mit anderen Faserarten wie z.B. Baumwolle, regenerierte Zellulosefasern oder Wolle vorliegen können mit den erfindungsgemässen Farbstoffen erfolgt zweckmässig aus wässriger Suspension in Gegenwart von Carriern zwischen etwa 80 bis 100°C, in Abwesenheit von Carriern zwischen etwa 110 - 140°C, sowie nach dem sogenannten Thermofixierverfahren bei etwa 180 - 230°C. Das Bedrucken der genannten Materialien kann so durchgeführt werden, dass die mit den neuen Farbstoffen bedruckte Ware in Gegenwart eines Carriers bei Temperaturen zwischen etwa 100 - 110°C oder auch in Abwesenheit eines Carriers bei etwa 110 - 180°C

gedämpft oder auch nach dem sogenannten Thermofixierverfahren bei etwa 180 - 230°C behandelt wird.

Die erfindungsgemässen Farbstoffe eignen sich auch zum Färben der vorstehend aufgeführten hydrophoben Materialien aus organischen Lösungsmitteln und zum Färben in der Masse.

Von besonderem technischen Interesse sind Farbstoffe der allgemeinen Formel IX

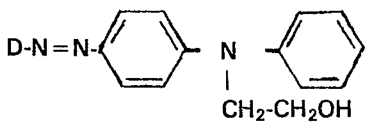 (IX)

in der D 5-Nitrothiazolyl-(2) oder 3,5-Dinitrothienyl bedeutet.

Farbstoffe der Formel IX eignen sich hervorragend für die oben angegebenen Druck- und Färbeverfahren und darüber hinaus besonders gut für die Herstellung von Ätzreservedrucken und Reserveeffekten unter Verwendung alkalischer Ätzmittel, wie sie z.B. in den Deutschen OS 2 836 391 und 2 856 283 beschrieben sind.

Aus der Französischen Zusatz-Patentschrift 93 514 zu dem Französischen Hauptpatent 1 530 734, insbesondere aus den Beispielen 39, 62 und 63 sind Farbstoffe der Formel

E-N=N-F-N-G
|
$R^{11}$

bekannt, worin

E für Nitrothiazolyl, F für Phenylen oder Methylphenylen, G für einen negativ substituierten Phenylrest, insbesondere den Nitrophenyl-Rest und $R^{11}$ für die Gruppe $-CH_2CH_2OH$ stehen.

Aus der Schweizer Patentschrift 367 254, Tabelle II, Nr. 12 und Tabelle III Nr. 22 sind die strukturell vergleichbaren Monoazofarbstoffe der Formeln

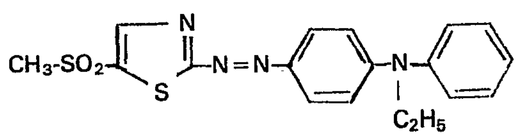

und

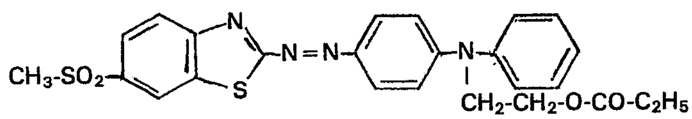

bekannt,

die definitionsgemäss in der Diazokomponente eine Sulfonylgruppe, z.B. eine Alkylsulfonylgruppe aufweisen.

*Beispiel 1*

a) Eine Lösung von 0,2 Mol diazotiertem 2-Amino-5-nitrothiazol in einem Gemisch aus Schwefelsäure, Essigsäure und Propionsäure (erhalten nach der Vorschrift des Beispiels 1 von der DAS 10 19 415) wird bei 0 bis + 5°C zu einer Lösung von 42,6 Teilen N-$\beta$-Hydroxyäthyldiphenylamin in 320 Teilen iso-Butanol in 10 Minuten gegeben. Nach 2stündigem Nachrühren wird auf 3000 Teile Eiswasser gefällt, der Farbstoff abfiltriert, neutral gewaschen und getrocknet.

b) 30 Teile des Farbstoffs der Formel

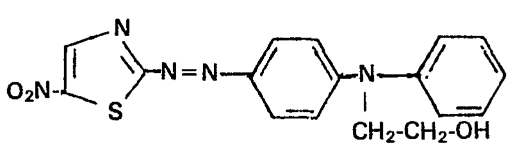

werden in feiner Verteilung zu einer Klotzflotte gegeben, die 937 Teile Wasser, 3 Teile Mononatriumphosphat, 10 Teile Natriumchlorat und 20 Teile eines Polymerisationsproduktes auf Acrylsäurebasis als Antimigrationsmittel auf 1000 Teile enthält. Nach dem Trocknen wird mit einer Druckpaste, die 600 Teile einer wässrigen 10%igen Johanniskernmehlätherverdickung, 120 Teile Wasser, 80 Teile Natriumcarbonat, 100 Teile Polyäthylenglykol 400 und 100 Teile Glycerin auf 1000 Teile enthält, überdruckt. Nach dem Fixieren mit überhitztem Dampf während 7 Minuten bei 175°C, reduktiven Nachbehandeln, Seifen, anschliessendem Spülen und Trocknen erhält man einen marineblauen Druck mit sehr guten Echtheiten, vor allem guter Licht-, Trockenhitzefixier-, Reib- und Waschechtheit. An den Stellen, auf die die sodahaltige Druckpaste aufgedruckt wird, erhält man einen sehr guten Weissfond mit scharfen Konturen.

*Beispiel 2*

Anstelle von 30 Teilen des Farbstoffs von Beispiel 1 werden 20 Teile des Farbstoffs der Formel

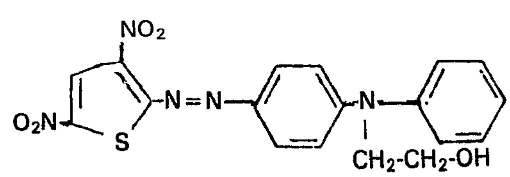

verwendet und im übrigen so verfahren, wie im Beispiel 1 angegeben. Man erhält einen blauen Druck mit sehr guten coloristischen Eigenschaften, insbesondere mit einer guten Licht-, Trockenhitzefixier-, Reib- und Waschechtheit und an den geätzten Stellen einen sehr guten Weissfond mit scharfen Konturen.

**Patentansprüche**

1. Wasserunlösliche Azofarbstoffe der Formel I

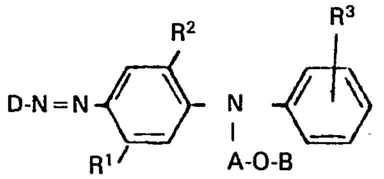 (I)

in der
D Nitrothiazolyl, das gegebenenfalls noch durch Methyl substituiert ist oder Nitrothienyl, das gegebenenfalls noch durch eine weitere Nitrogruppe oder durch Cyan substituiert ist,
A eine Alkylenkette mit 1 bis 6 C-Atomen, die durch eine OH-Gruppe substituiert sein kann,
B Wasserstoff, eine Alkylgruppe mit 1 bis 4 C-Atomen, Hydroxyalkyl mit 2 bis 4 C-Atomen, $C_1$ bis $C_4$ Alkoxy- oder $C_1$ bis $C_4$ Alkanoyloxyalkyl mit 3 bis 8 C-Atomen, Hydroxypolyoxyalkylen 4 bis 12 C-Atomen, $C_1$ bis $C_4$ Alkoxy- oder $C_1$ bis $C_4$ Alkanoyloxypolyoxyalkylen mit 5 bis 16 C-Atomen, eine Alkanoylgruppe mit 2 bis 6 C-Atomen, Benzoyl,
$R^1$ Wasserstoff, Methyl und Chlor,
$R^2$ Wasserstoff, Halogen, Alkyl mit 1 bis 4 C-Atomen oder Alkoxy mit 1 bis 4 C-Atomen,
$R^3$ Wasserstoff und Alkoxy mit 1 bis 8 C-Atomen
bedeuten.

2. Wasserunlösliche Azofarbstoffe gemäss Anspruch 1, dadurch gekennzeichnet, dass $R^1$, $R^2$ und $R^3$ Wasserstoff sind.

3. Wasserunlösliche Azofarbstoffe gemäss den Ansprüchen 1 und 2, dadurch gekennzeichnet, dass die Gruppe-AOB für die $\beta$-Hydroxyäthylgruppe steht.

4. Wasserunlöslicher Azofarbstoff der Formel X oder XI

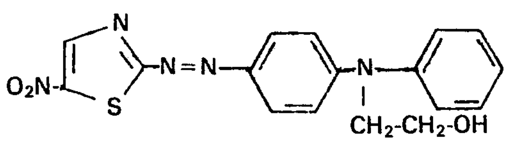 (X)

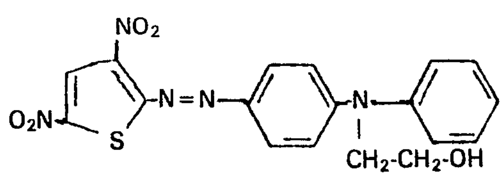 (XI)

5. Verfahren zur Herstellung von wasserunlöslichen Azofarbstoffen der in Anspruch 1 angegebenen allgemeinen Formel I, dadurch gekennzeichnet, dass man ein von ionogenen Gruppen freies Amin der allgemeinen Formel II

$$D\text{-}NH_2 \qquad (II)$$

worin D die in Anspruch 1 angegebene Bedeutung hat, diazotiert und mit einem Diphenylaminderivat der allgemeinen Formel III

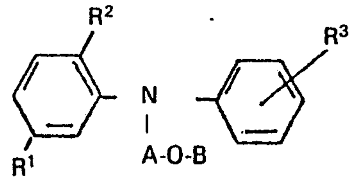 (III)

worin $R^1$, $R^2$, $R^3$, A und B die in Anspruch 1 angegebenen Bedeutungen besitzen, kuppelt.

6. Verfahren nach Anspruch 5, dadurch gekennzeichnet, dass man entweder ein Gemisch von Aminen der Formel II bei der Diazotierung einsetzt, und auf ein Diphenylaminderivat der allgemeinen Formel III kuppelt oder ein Amin der Formel II einsetzt und auf ein Gemisch von Diphenylaminderivaten der Formel III kuppelt.

7. Verwendung der Farbstoffe der Ansprüche 1 bis 4 zum Färben und Bedrucken von hydrophoben Fasermaterialien, insbesondere zum Bedrucken von hydrophoben Fasermaterialien nach Ätzdruckverfahren unter Verwendung alkalischer Ätzmittel.

**Claims**

1. Water-insoluble azo dyestuffs of the formula I

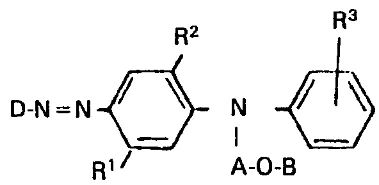 (I)

wherein
D denotes nitrothiazolyl which is optionally substituted by methyl, or nitrothienyl which is optionally substituted by a further nitro group or by cyano,
A denotes an alkylene chain having 1 to 6 C atoms which can be substituted by an OH group,
B denotes hydrogen, an alkyl group having 1 to 4 C atoms, hydroxyalkyl having 2 to 4 C atoms, $C_1$ to $C_4$ alkoxyalkyl or $C_1$ to $C_4$ alkanoyloxyalkyl having 3 to 8 C atoms, hydroxypolyoxyalkylene having 4 to 12 C atoms, $C_1$ to $C_4$ alkoxypolyoxyalkylene or $C_1$ to $C_4$ alkanoyloxypolyoxyalkylene having 5 to 16 C atoms, an alkanoyl group having 2 to 6 C atoms, benzoyl,
$R^1$ denotes hydrogen, methyl and chlorine,
$R^2$ denotes hydrogen, halogen, alkyl having 1 to 4 C atoms or alkoxy having 1 to 4 C atoms,
$R^3$ denotes hydrogen and alkoxy having 1 to 8 C atoms.

2. Water-insoluble azo dyestuffs according to claim 1, characterised in that $R^1$, $R^2$ and $R^3$ are hydrogen.

3. Water-insoluble azo dyestuffs according to claims 1 and 2, characterised in that the group AOB represents the $\beta$-hydroxy-ethyl group.

4. Water-insoluble azo dyestuff of the formula X or XI

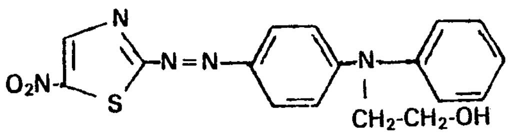

(X)

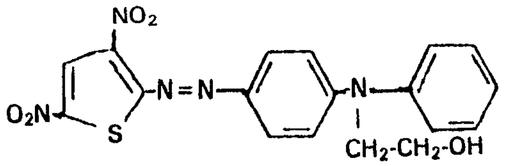

(XI)

5. Process for the manufacture of water-insoluble azo dyestuffs of the general formula I indicated in claim 1, characterised in that an amine which is free from ionic groups and has the general formula II

$$D\text{-}NH_2 \qquad (II)$$

wherein D has the meaning indicated in claim 1, is diazotised and coupled with a diphenylamine derivative of the general formula III

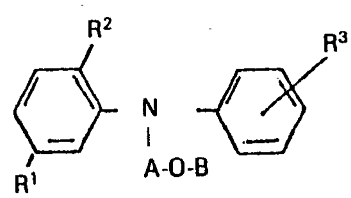

(III)

wherein $R^1$, $R^2$, $R^3$, A and B have the meanings indicated in claim 1.

6. Process according to claim 5, characterised in that either a mixture of amines of the formula II is employed in the diazotisation and the product is coupled with a diphenylamine derivative of the general formula III or an amine of the formula II is employed and the product is coupled with a mixture of diphenylamine derivatives of the formula III.

7. Use of the dyestuffs of claims 1 to 4, dyeing and printing hydrophobic fibre materials, in particular for printing hydrophobic fibre materials by discharge printing processes using alkaline discharging agents.

**Revendications**

1. Colorants azoïques insolubles dans l'eau de formule I

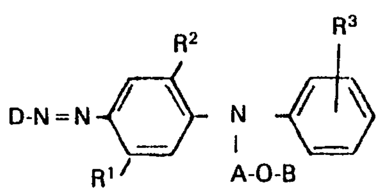

(I)

dans laquelle:

D représente un radical nitrothiazolyle éventuellement substitué par un méthyle, ou un radical nitrothiényle éventuellement substitué par un autre groupe nitro ou par un groupe cyano,

A est une chaîne alkylène en $C_1$ à $C_6$ pouvant être substituée par un groupe OH,

B représente l'hydrogène, un alkyle en $C_1$ à $C_4$, un hydroxyalkyle en $C_2$ à $C_4$, un $C_1$-$C_4$ alcoxy- ou $C_1$-$C_4$ alcanoyloxyalkyle en $C_3$ à $C_8$, un hydroxypolyoxyalkylène en $C_4$ à $C_{12}$, un $C_1$-$C_4$ alcoxy- ou $C_1$-$C_4$ alcanoyloxypolyoxyalkylène en $C_5$ à $C_{16}$, un alcanoyle en $C_2$ à $C_6$ ou un groupe benzoyle,

$R^1$ est l'hydrogène, un méthyle ou le chlore,

$R^2$ l'hydrogène, un halogène ou un alkyle ou un alcoxy en $C_1$ à $C_4$, et

$R^3$ l'hydrogène ou un alcoxy en $C_1$ à $C_8$.

2. Colorants selon la revendication 1 dans lesquels $R^1$, $R^2$ et $R^3$ sont chacun l'hydrogène.

3. Colorants selon la revendication 1 ou 2 dans lesquels le groupement AOB est un groupe $\beta$-hydroxyéthyle.

4. Colorant azoïque insoluble dans l'eau de formule X ou XI ci-après

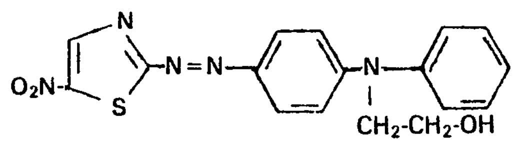

(X)

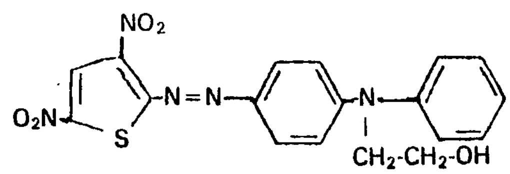

(XI)

5. Procédé de préparation des colorants azoïques insolubles dans l'eau de formule générale I selon la revendication 1, procédé caractérisé en ce que l'on diazote une amine sans groupe ionogène, de formule générale II

$$D\text{-}NH_2 \qquad (II)$$

dans laquelle D a la signification donnée en revendication 1, puis on copule le diazoïque avec un dérivé de diphénylamine de formule générale III

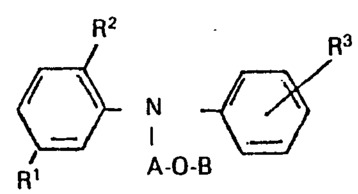

(III)

dans laquelle $R^1$, $R^2$, $R^3$, A et B ont les significations données en revendication 1.

6. Procédé selon la revendication 5, caractérisé en ce que, ou bien on diazote un mélange d'amines de formule II, et on copule avec un dérivé de diphénylamine de formule générale III, ou bien on diazote une seule amine de formule II et on copule le diazoïque avec un mélange de dérivés de diphénylamine de formule III.

7. Utilisation des colorants selon l'une quelconque des revendications 1 à 4 pour la teinture et l'impression de matières fibreuses hydrophobes, en particulier pour l'impression de telles matières fibreuses par le procédé d'impression avec rongeage au moyen de rongeants alcalins.